# EUROPÄISCHE PATENTANMELDUNG

(11) **EP 3 502 539 A1**
(43) Veröffentlichungstag der Anmeldung: **26.06.2019**
(21) Anmeldenummer: 18215850.1
(22) Anmeldetag: 24.12.2018
(51) Int. Cl.: F16P 3/14, F16P 3/08

(54) **SCHUTZEINRICHTUNG SOWIE VERFAHREN ZUM BETREIBEN EINER SCHUTZEINRICHTUNG**

(30) Priorität: 22.12.2017 CH 16072017
(71) Anmelder: ELESTA GmbH, 7310 Bad Ragaz (CH)
(72) Erfinder: Bellingkrodt, Martin, 70619 Stuttgart (DE); Geges, Norbert, 7323 Vilters (CH); Guntli, Andreas, 8880 Walenstadt (CH); Klima, Andreas, 8890 Flums (CH); Lukas, Verena, 7205 Zizers (CH); Möhr, Raphael, 7304 Maienfeld (CH); Rodoni, Daniele, 6948 Porza (CH); Steiner, Roman, 8725 Ernetschwi (CH); Zöschg, Dietmar R., 8824 Schönenberg (CH)
(74) Vertreter: Riederer Hasler & Partner Patentanwälte AG

(57) **Zusammenfassung**

Dargestellt und beschrieben ist eine Schutzeinrichtung 11 für eine Fertigungsanlage 19 mit einem durch eine Zutrittsbarriere 13, 14 abgesicherten Zutrittsbereich 15, und mit einer Sensoreinheit 17 zur Überwachung eines Schliesszustandes der Zutrittsbarriere 13, 14, wobei die Sensoreinheit 17 dazu ausgebildet ist, die Fertigungsanlage 19 ausser Betrieb zu setzen, wenn das Öffnen der Zutrittsbarriere 13, 14 detektiert wird und die Fertigungsanlage in betriebsbereiten Zustand zu versetzen, wenn die Zutrittsbarriere 13, 14 geschlossen ist

Erfindungsgemäss ist vorgesehen, dass die Sensoreinheit 17 dazu ausgebildet ist, Daten aus einem Wart-ungsschltissel 21 auszulesen, die ausgelesenen Daten auf Gültigkeit zu prüfen und zu speichern und bei Vorliegen gültiger Daten ein Setzen in einen betriebsbereiten Zustand der Fertigungsanlage 19 zu unterbinden.

## Beschreibung

Die Erfindung betrifft eine Schutzeinrichtung für eine Fertigungsanlage gemäss Oberbegriff des Anspruchs 1 sowie ein Verfahren zum Betreiben einer derartigen Schutzeinrichtung nach dem Oberbegriff des Anspruchs 9. Die Erfindung betrifft auch eine Sensoreinheit zur Verwendung mit einem erfindungsgemässen Verfahren oder zur Verwendung in einer erfindungsgemässen Schutzeinrichtung.

Schutzeinrichtungen sind aktive oder passive Anlagenkomponenten von Fertigungsanlagen, welche diese absichern. Von Fertigungsanlagen, wie beispielsweise Maschinen, industrielle Anlagen, stationäre Industrierobotern und ähnlichen technischen Fertigungseinrichtungen gehen nämlich Gefahren aus, insbesondere für das Wartungs- und Bedienpersonal. Zu besonders gefährlichen Fertigungsanlagen gehören beispielsweise Sägen oder Pressen. Dabei hängt die Gefährdung sowohl von der Art und Funktionsweise der Fertigungsanlage, als auch von dem Verhalten des Bedien- und Wartungspersonals ab. Um vor den Gefahren einer sich im Betrieb befindlichen Fertigungsanlage oder einer sich in Betrieb setzenden Fertigungsanlage zu schützen, dürfen derartige Fertigungsanlagen nur mit geeigneten Schutzeinrichtungen betrieben werden. Oftmals bestehen dies Schutzeinrichtungen aus Schutzgittern oder Schutzzäunen, die jeglichen Zugang zu der geschützten Fertigungsanlage verwehren. Allerdings gibt es immer wieder Situationen, die dazu führen, dass Schutzeinrichtungen nicht wirken können. Beispielsweise muss eine Fertigungsanlage mit Material versorgt, justiert oder gereinigt oder gewartet werden. Folglich muss sich das Bedienpersonal oder das Wartungspersonal in gefährliche Bereiche der Fertigungsanlage begeben. Der Zutritt erfolgt meist über Zutrittsbarrieren wie Türen, Schranken oder dergleichen, wobei in der Regel unmittelbare Folge des Öffnens der Zutrittsbarriere ist, dass die Fertigungsanlage ausser Betrieb gesetzt wird.

Um ein unbeabsichtigtes Wiedereinschalten einer durch Öffnen einer Zutrittsbarriere abgeschalteten Fertigungsanlage zu vermeiden ist es bekannt Wartungsschlösser oder Sperrschliessen zu verwenden. Hierbei handelt es sich um zangenartig ausgebildete Schliessen, die so an einer Zutrittsbarriere angebracht werden, dass sie die Zutrittsbarriere so blockieren, dass diese nicht wieder geschlossen werden kann. Gleichzeitig werden diese Schliessen gegen unbefugtes Öffnen bzw. gegen unbefugtes Abnehmen gesichert. Denn wenn detektiert wird, dass die Zutrittsbarriere wieder geschlossen ist, beispielsweise, weil die Zutrittsbarriere wieder zugefallen ist, wird ein Anfahren der Fertigungsanlage wieder möglich. Die Sicherung erfolgt daher mittels Vorhängeschlössern, wobei jede Wartungsperson ein eigenes Vorhängeschloss anbringen muss, damit die Sicherheit aller Wartungspersonen gewährleistet ist. In der Regel können bei marktüblichen Sperrschliessen bis zu sechs Vorhängeschlösser angebracht werden. Um eine Sperrschliesse wieder zu entfernen, müssen alle Vorhängeschlösser geöffnet und von der Sperrschliesse abgenommen werden.

US 2007/0205861 offenbart ein System und ein Verfahren, die den Einsatz eines Sicherheitsmechanismus in Verbindung mit einer Schutzzone in einer industriellen Automationsumgebung erleichtert. Ein RFID-Tag enthält sich auf den Ort und/oder die Nähe beziehende Daten, die von einer Sicherheitskomponente verwendet werden können. Die Sicherheitskomponente kann einen sicheren Modus implementieren, um eine geschützte Zone in Verbindung mit einer Vorrichtung bereitzustellen, die zumindest teilweise auf den mit dem RFID-Tag verbundenen Daten basiert.

Gemäss einem Beispiel kann das RFID-Tag in einem intelligenten Badge eingesetzt sein, der spezifische biometrische Daten eines Individuums lesen kann. Die biometrischen Daten können zusammen mit den codierten Zugangsdaten an eine RFID-Komponente gesendet und in der Folge an ein Steuergerät weitergeleitet werden. Das Steuergerät authentifiziert den Badge und kann dann eine Sicherheitsroutine auslösen. Von Bedeutung ist, dass nur die RFID-Komponente jeweils nur von einem einzigen RFID-Tag Daten einliest.

Die EP-A- 1 826 472 bezieht sich auf einen Sicherheitsschalter zum Abschalten einer Maschine, wie z.B. einen Arbeitsroboter, wenn der Schalter das Öffnen einer Türe zum geschützten Arbeitsbereich, wo die Maschine stationiert ist, feststellt. Um eine Wartung eines Arbeitsroboters durchzuführen, zieht ein Arbeiter einen Griff eines Schiebers und bewegt den Schieber nach hinten, um dadurch einen Schieberpassabschnitt aus einem Passlochabschnitt herauszuziehen und einen Aktuator von einem Betätigungsabschnitt eines Türschalters zurückzuziehen. Beim Sicherheitsschalter der EP-A-1 826 472 handelt es sich also um ein hardwaremässiges Schloss. RFID-Tags kommen nicht zum Einsatz.

Aufgabe der Erfindung ist es eine alternative Ausgestaltung für Schutzvorrichtung für Fertigungsanlagen zu schaffen bei der auf die Verwendung von Sperrschliessen verzichtet werden kann. Ausserdem soll ein verbessertes Verfahren zum Betreiben einer Schutzeinrichtung bereitgestellt werden. Für das Bedien- und Wartungspersonal soll der Einsatz des erfindungsgemässen Verfahrens und der erfindungsgemässen Schutzvorrichtung möglichst einfach und gleichzeitig sicher gestaltet sind.

Die Aufgabe wird gelöst durch eine Schutzeinrichtung für eine Fertigungsanlage mit den Merkmalen des Anspruch 1.

Die erfindungsgemässe Schutzeinrichtung weist einen mit einem durch eine Zutrittsbarriere abgesicherten Zutrittsbereich auf und eine Sensoreinheit zur Überwachung eines Schliesszustandes der Zutrittsbarriere, wobei die Sensoreinheit dazu ausgebildet ist, die Fertigungsanlage ausser Betrieb zu setzen, wenn das Öffnen der Zutrittsbarriere detektiert wird und die Fertigungsanlage in betriebsbereiten Zustand zu versetzen, wenn die Zutrittsbarriere geschlossen ist, wobei die Sensoreinheit weiters dazu ausgebildet ist, Daten aus einem Wartungsschlüssel auszulesen, die ausgelesenen Daten auf Gültigkeit zu prüfen und zu speichern und bei Vorliegen gültiger Daten ein Setzen in einen betriebsbereiten Zustand der Fertigungsanlage zu unterbinden.

Die Schutzeinrichtung nach Art der Erfindung ermöglicht daher beispielswiese, dass durch das Öffnen einer Zutrittsbarriere durch eine Wartungsperson eine Fertigungsanlage ausser Betrieb gesetzt wird und dass die Wartungsperson mit ihrem Wartungsschlüssel, der von der Sensoreinheit eingelesen wird, die Fertigungsanlage gegen Inbetriebnahme sichern kann. Dies bedeutet, dass weder eine andere Wartungsperson die Anlage anfahren kann noch ein automatisiertes Anfahren der Anlage durch Schliessen der Zutrittsbarriere möglich ist, solange die Daten des Wartungsschlüssels gespeichert sind.

Eine Zutrittsbarriere im Sinne der Erfindung kann beispielsweise eine mechanische Vorrichtung wie eine Türe, eine Schranke, ein Gatter oder ähnliches sein. Die Zutrittsbarriere wird von der Sensoreinheit in der Form überwacht, als dass die Sensoreinheit detektiert, ob sich die Zutrittsbarriere in geöffnetem - den Zutritt zur Fertigungsanlage ermöglichenden - oder in geschlossenem - den Zutritt zur Fertigungsanlage verhindernden Zustand befindet. Unter einem Wartungsschlüssel ist ein Datenträger zu verstehen, welcher elektronische Daten trägt, die über eine geeignete Schnittstelle von der Sensoreinheit ausgelesen werden können. Bevorzugt enthalten gültige Daten zumindest eine eindeutige Identifikationsnummer und eine Information zur Art des Datenträgers, also ein spezifische Information, die den Datenträger beispielsweise als Wartungsschlüssel ausweist. Grundsätzlich ist es möglich, Wartungsschlüssel mittels der eindeutigen Identifikationsnummer einer Person zuzuordnen und so die Wartungsschlüssel zu personalisieren. Daten können in einer Weiterbildung der Erfindung auch dann als ungültig bewertet werden, wenn die Prüfung des in den Detektionsbereich eingebrachten Wartungsschlüssels zwar als solche gültige Daten im zuvor erläuterten Sinne mit Identifikationsnummer und spezifischer Information eines Wartungsschlüssels ergibt, allerdings eine weitere Berechtigungsprüfung zeigt, dass der eingebrachte Wartungsschlüssel und damit die diesen Wartungsschlüssel besitzende Person keine Berechtigung für Arbeiten an der betreffenden Fertigungseinrichtung hat. Die Daten eines solchen nicht berechtigten Wartungsschlüssels werden von der Sensoreinheit als ungültige Daten eingestuft und nicht gespeichert; dementsprechend wird beim Erkennen eines Wartungsschlüssel ohne Berechtigung für die Fertigungsanlage diese auch nicht für das Inbetriebsetzen gesperrt.

In der Regel wird die Sensoreinheit mit einer Steuereinrichtung der Fertigungsanlage verbunden sein und dieser ggf. signalisieren, dass das Öffnen der Zutrittsbarriere detektiert wurde. Die Steuerlogik der Steuereinrichtung wird dann die Abschaltung der Fertigungsanlage veranlassen. Alternativ ist auch möglich, dass die Sensoreinheit unmittelbar für die Abschaltung der Fertigungsanlage sorgt, beispielsweise durch eine Stromabschaltung mittels eines Relais. Erfindungsgemäss ist die Sensoreinheit dazu ausgebildet, Daten aus einem Wartungsschlüssel auszulesen und zu verarbeiten. Zusatzgeräte oder spezielle Komponenten müssen hierzu nicht mit der Sensoreinheit verbaut werden, was selbstredend hilft, den Verdrahtungsaufwand für die Schutzeinrichtung klein zu halten.

Die Aufgabe wird auch gelöst durch ein Verfahren zum Betrieb einer Schutzeinrichtung für eine Fertigungsanlage mit den Merkmalen des Anspruch 9, wobei die Fertigungsanlage einen durch eine Zutrittsbarriere abgesicherten Zutrittsbereich und mit einer Sensoreinheit zur Überwachung des Schliesszustandes der Zutrittsbarriere aufweist, wobei die Sensoreinheit die Fertigungsanlage ausser Betrieb setzt, wenn das Öffnen der Zutrittsbarriere detektiert wird und die Fertigungsanlage in betriebsbereiten Zustand versetzt, wenn die Zutrittsbarriere als geschlossen detektiert wird, wobei die Sensoreinheit Daten aus einem Wartungsschlüssel ausliest und die ausgelesenen Daten auf Gültigkeit prüft und bei Vorliegen gültiger Daten diese speichert und ein Setzen der Fertigungsanlage in einen betriebsbereiten Zustand verhindert oder rückgängig macht.

Zur Klarstellung sei vermerkt, dass die Fertigungsanlage beim Betreten grundsätzlich in Betrieb sein kann. Dann wird beim Betreten die Anlage gestoppt und nachdem ein Wartungsschlüssel eingelesen wurde, wird verhindert, dass die Anlage in eine betriebsbereiten Zustand versetzt wird, der es erlauben würde, dass die Anlage automatisch beim Schliessen der Zutrittsbarriere oder manuell durch eine Wartungsperson wieder angefahren wird. Ist die Fertigungsanlage beim Betreten nicht in Betrieb, sondern nur in einem betriebsbereiten Zustand, so wird dieser betriebsbereite Zustand nach dem Einlesen des Wartungsschlüssel rückgängig gemacht, was in der Konsequenz bedeutet, dass die Fertigungsanlage weder automatisch noch manuell anfahren kann.

Weiterer Gegenstand der Erfindung ist auch eine Sensoreinheit mit einem Lesegerät zum Auslesen von Daten aus einem Wartungsschlüssel zur Verwendung mit einem Verfahren nach den Ansprüchen 9 bis 15 sowie zur Verwendung in einer Schutzeinrichtung für eine Fertigungsanlage nach einem der Ansprüche 1 bis 8.

Die im Folgenden angeführten vorteilhaften Ausführungsvarianten der Erfindung führen allein oder in Kombination miteinander zu weiteren Verbesserungen der erfindungsgemässen Schutzeinrichtung bzw. des erfindungsgemässen Verfahrens.

In einer ersten Weiterbildung der Erfindung ist die Sensoreinheit der Schutzeinrichtung dazu ausgebildet, nur dann Daten aus einem Wartungsschlüssel auszulesen, wenn die Sensoreinheit das Öffnen der Zutrittsbarriere detektiert hat und die Fertigungsanlage ausser Betrieb gesetzt hat. Konkret bedeutet das, dass eine Wartungsperson den Gefahrenbereich einer Fertigungseinrichtung über einen Zutrittsbereich betreten kann. Dabei öffnet die Person zwangsläufig die Zutrittsbarriere. Dies wird von der Sensoreinheit erfasst und die Fertigungsanlage wird abgeschaltet und kann auch nicht wieder eingeschaltet werden, solange der Zustand «Zutrittsbarriere offen» detektiert wird. Beim Betreten des Gefahrenbereichs kann nun die Wartungsperson ihren Wartungsschlüssel in den Detektionsbereich der Sensoreinheit einbringen. Die Sensoreinheit liest dann die Daten aus dem Wartungsschlüssel aus. Wenn aufgrund der ausgelesenen Daten erkannt wird, dass es sich um einen Wartungsschlüssel mit gültigen Daten handelt, speichert die Sensoreinheit die Daten des Wartungsschlüssels und versetzt die Fertigungsanlage in einen Zustand, der ein Einschalten oder Anfahren der Fertigungsanlage unmöglich macht.

Die Sensoreinheit der Schutzeinrichtung im Sinne der vorliegenden Erfindung ist vorzugsweise in der Art von Näherungssensoren ausgeführt, welche die Annäherung eines Gegenstands berührungslos detektieren können. Es ist bekannt hierfür sogenannte RFID (radio-frequency identification) - Elemente einzusetzen. Diese weisen einen meist passiven RFID-Transponder, auch RFID-Tag oder RFID-Sender genannt, und ein RFID-Lesegerät auf. Bei Annäherung des RFID-Transponders an das RFID-Lesegerät wird der RFID-Transponder durch ein vom RFID-Lesegerät ausgestrahltes elektromagnetisches Wechselfeld angeregt und mit Energie versorgt. Der Mikrocontroller des RFID-Transponders ist dann in der Lage die vom RFID-Empfänger gesendeten Befehle zu decodieren und entsprechende Aktionen zu setzen, wie beispielsweise das Ausgeben seiner gespeicherten Information oder das Einschreiben von neuem Speicherinhalten. Beispielsweise kann die Sensoreinheit zur Überwachung des Schliesszustandes der Zutrittsbarriere ein RFID-Lesegerät und einen ersten an der Zutrittsbarriere angebrachten RFID-Transponder aufweisen, wobei der Wartungsschlüssel als ein zweiter RFID-Transponder ausgeführt ist, und das RFID-Lesegerät dazu ausgebildet ist, Daten aus beiden RFID-Transponder auszulesen.

Sofern die Schutzeinrichtung mit einer Sensoreinheit auf Basis der RFID-Technologie realisiert wird, arbeitet diese vorzugsweise im Langwellenbereich, insbesondere mit einer 125 kHz Übertragungstechnologie. Hierbei kommt ein Protokoll, wie beispielsweise das HiTAG oder das HiTAGS Protokoll oder auch das Unique-Protokoll für RFID-Anwendungen zur Datenübertragung zum Einsatz, welches mehrere, insbesondere acht Datensätze aufweist, wobei entsprechend den Konventionen dieses Protokolls der erste Datensatz eine eindeutige und unveränderliche Identifikationsnummer enthält. Die übrigen sieben Datensätze sind frei belegbar und können entsprechend dem Anwendungsfall angepasst und verwendet werden.

In einer vorteilhaften Ausführungsform der Erfindung wird zur Datenübertragung ein Verfahren entsprechend der Schweizer Patentanmeldung CH01275/17 der Anmelderin eingesetzt. Bei diesem Verfahren zur Übermittlung von Daten von einem RFID-Transponder zu einem RFID-Lesegerät wird eine unveränderliche, eindeutigen Identifikationsnummer des RFID-Transponders in das RFID-Lesegerät eingelesen und in einem zweiten Schritt wird eine spezifische Kennung des RFID-Transponders eingelesen, wobei die jeweils aktuell eingelesenen Daten die gespeicherten Daten überschreiben. In einem Zwischenschritt müssen daher die eingelesenen Daten an eine andere Stelle des Speichers kopiert werden, um von dort aus weiter verarbeitet werden zu können. Durch das Einlesen der Identifikationsnummer im ersten Schritt und durch das Einlesen der spezifischen Kennung im zweiten Schritt, kann jedoch eine fehlersichere Datenübertragung sichergestellt werden. Ausserdem ist gewährleistet, dass immer aktuelle Daten aus dem Transponder eingelesen werden, weil sich spezifische Kennung und Identifikationsnummer unterscheiden und somit zwei unterschiedliche Datensätze vorliegen. Die Daten müssen sich folglich bei jedem Verfahrensschritt ändern. Geschieht das nicht, kann erkannt werden, ob der Speicherinhalt «hängen bleibt» und ob der Speicher nicht oder nicht mehr richtig arbeitet. Um die Datenübertragung bei der Übertragung oder beim Empfang der Daten sicher zu machen, kann gemäss der Schweizer Patentanmeldung CH01275/17 der Anmelderin vor der Verarbeitung der eingelesenen Daten eine Plausibilisierung dieser Daten mit einer zyklischen Redundanzprüfung vorgesehen werden.

Gültige Daten des Wartungsschlüssels umfassen somit zumindest eine eindeutige und unveränderliche Identifikationsnummer entsprechend den Konventionen des verwendeten Protokolls und eine Kennung, welche für einen Wartungsschlüssel spezifisch ist. Die spezifische Kennung für einen Wartungsschlüssels ermöglicht, dass die RFID-Transponder voneinander unterschieden werden können. So besitzt auch der erste, fest installierte und an der Zutrittsbarriere angebrachten RFID-Transponder eine spezifische Kennung, die sich aber von der spezifischen Kennung des Wartungsschlüssels unterscheidet. Dementsprechend gibt die Sensoreinheit Steuersignale an die Steuereinrichtung der Fertigungsanlage auch in Abhängigkeit der ausgelesenen spezifischen Kennung aus.

So bedeutet das Fehlen von detektierbaren RFID-Transpondern im Bereich des Lesegerätes, dass die Zutrittsbarriere offen ist und die Fertigungsanlage abzuschalten ist. Wird bei offenem Zustand der Zutrittsbarriere erneut ein gültiger Datensatz empfangen, prüft die Sensoreinheit unter anderem, ob dieser die spezifische Kennung eines Wartungsschlüssels enthält oder ob die Daten die spezifische Kennung des ersten auf der Zutrittsbarriere montierten RFID-Lesegerätes entsprechen. Im ersten Fall wird die Anlage für eine Inbetriebnahme gesperrt, wenn nicht schon der identischer Datensatz vorliegt und im zweiten Fall wird die Anlage wieder anlaufen bzw. in betriebsbereiten Zustand versetzt, wenn keine Daten von anderen Wartungsschlüssels gespeichert sind.

In einer vorteilhaften Weiterbildung der Erfindung weist die Sensoreinheit der Schutzeinrichtung eine Anzeigevorrichtung auf, die dazu ausgebildet ist optisch, akustisch, haptisch oder anderweitig zu signalisieren, dass gültige Daten erfolgreich ausgelesen und gespeichert wurden. Damit ist es einer Wartungsperson möglich zu erkennen, ob die Daten aus dem Wartungsschlüssel ordnungsgemäss ausgelesen und gespeichert wurden. Erfolgt die entsprechende Anzeige, so kann die Wartungsperson sicher sein, dass die Anlage gegen unbefugte oder unabsichtliche Inbetriebnahme gesichert ist. Die Anzeigevorrichtung kann beispielsweise mit unterschiedlich farbigen LEDs realisiert werden, mit deren Hilfe die unterschiedlichen Erfassungszustände von Daten betreffend Wartungsschlüsseln angezeigt werden können.

Weiters kann die Sensoreinheit der Schutzeinrichtung dazu ausgebildet sein, beim Auslesen der Daten diese mit allenfalls bereits gespeicherten gültigen Daten zu vergleichen und für den Fall, dass keine Übereinstimmung festgestellt wird, die ausgelesenen Daten ebenfalls zu speichern. Ausserdem kann die Sensoreinheit dazu ausgebildet sein, beim Auslesen der Daten diese mit allenfalls bereits gespeicherten Daten zu vergleichen und für den Fall, dass Übereinstimmung festgestellt wird, die Daten aus dem Speicher zu löschen und sofern keine weiteren Daten gespeichert sind die Fertigungsanlage in betriebsbereiten Zustand zu versetzen. Somit bedeuten lokal in einem Speicher einer Sensoreinheit vorhandene gültige Daten eines Wartungsschlüssels, dass die Fertigungsanlage für eine Inbetriebnahme gesperrt ist. Folglich bedeutet dies auch, dass die Fertigungsanlage selbst dann nicht in Betrieb genommen werden kann bzw. wieder anfährt, wenn die Sensoreinheit detektiert, dass die Zutrittsbarriere geschlossen ist.

Durch den Abgleich der ausgelesenen Daten mit bereits gespeicherten gültigen Daten kann eine nahezu beliebige Anzahl von Person die Fertigungsanlage über den Zutrittsbereich betreten und die Fertigungsanlage durch Registrierung des eigenen Wartungsschlüssels gegen Wiedereinschalten sichern. Begrenzt ist die Anzahl der registrierbaren Wartungsschlüssel lediglich durch den in der Sensoreinheit vorhandenen Speicherplatz.

Wenn die Sensoreinheit der Schutzeinrichtung mit einer Steuereinheit der Fertigungsanlage über einen fehlersicheren Bus verbunden ist, ist es möglich, dass die Sensoreinheit gültige Daten des Wartungsschlüssels an diese Steuereinheit weiterleitet. Ebenso kann ein zusätzliches Lesegerät zum Auslesen der Daten aus dem Wartungsschlüssel vorgesehen sein, welches mit der Steuereinrichtung der Fertigungsanlage über einen fehlersicheren Bus verbunden ist. Dieses zusätzlich Lesegerät kann als reines Lesegerät für den Wartungsschlüssel ausgeführt sein oder es kann Teil einer zweiten Sensoreinheit sein, die eine zweiten Zutrittsbereich überwacht. Werden die Daten der Wartungsschlüssel zentral von der Steuereinrichtung der Fertigungsanlage gespeichert und verarbeitet, so ist es möglich die Daten des Wartungsschlüssels an einer ersten Sensoreinheit einlesen zu lassen, was zur Folge hat, dass das Inbetriebsetzen der Fertigungsanlage unterbunden ist, und die Daten des Wartungsschlüssels an einer zweiten Sensoreinheit erneut einlesen zu lassen, was dann zur Folge hat, dass der Wartungsschlüssel als bereits vorhanden erkannt wird und dass der entsprechende Datensatz gelöscht wird. Die Fertigungsanlage ist somit wieder in einem betriebsbereiten Zustand.

Die fehlersichere Übertragung von Daten über den Bus ist wichtig, weil falsch oder nicht übertragene Daten zu einer Fehlsteuerung der Fertigungsanlage führen können, also beispielsweise könnte die Fertigungsanlage aufgrund einer falsch erfassten Datenlage wieder in betriebsbereiten Zustand versetzt werden oder wieder Anfahren, obwohl sich noch Personen im Gefahrenbereich befinden.

Es wurden daher verschiedenen Standards geschaffen, um eine fehlersichere Kommunikation über einen Datenbus zwischen Sensoreinheiten oder Aktoren und Steuer- und Überwachungseinrichtungen zu ermöglichen. Einer davon ist der sogenannte IO-Link-Standard gemäss IEC61131-9 bzw. gemäss 10-Link System Description - Technology and Application, Version July 2013, Order number 4.392 der erweitert wurde, um auch bei sicherheitsrelevanten Anwendungen eingesetzt werden zu können. Bekannt ist diese Erweiterung unter IO-Link Safety Standard gemäss IO-Link Safety System Extensions Specification, Version 1.0, April 2017, Order No: 10.092. Weitere bekannte Standards für sicherheitsrelevante Anwendungen sind beispielsweise: der AS-i Bus Standard, der CANopen-Safety-Standard, EtherCAT, Profibus oder Profinet.

Diese Safety Standards gewährleisten die sichere Kommunikation zwischen Sensoreinheiten oder Aktoren und Steuer- und Überwachungseinrichtungen. Bezogen auf die vorliegende Erfindung bedeutet dies, dass beispielsweis die Einhaltung des IO-Link Safety Standard dazu führt, dass die sicherheitsrelevante Kommunikation zwischen Steuereinheit der Fertigungseinrichtung und Sensoreinheit fehlersicher ist, obwohl die Daten nur über einen einzigen Übertragungsweg gesendet werden. Die Redundanz ist also nicht durch eine doppelte Ausführung von Schaltungsanordnungen oder dergleichen gegeben, sondern wird durch die Einhaltung eines entsprechenden Standards wie beispielsweise des IO-Link Safety Standards gewährleistet.

In einer Weiterbildung der Erfindung kann die Sensoreinheit der Schutzeinrichtung dazu ausgebildet sein, eine Zutrittssicherung der Zutrittsbarriere nur dann zum Öffnen freizugeben, wenn ein Wartungsschlüssel mit gültigen Daten im Detektionsbereich der Sensoreinheit eingebracht ist.

Weitere vorteilhafte Weiterbildungen der Erfindungen sind den Unteransprüchen zu entnehmen. Zusätzliche Vorteile der vorliegenden Erfindung ergeben sich auch aus der nachfolgenden Beschreibung der Figuren.

Es zeigen in nicht massstabsgetreuer, schematischer Darstellung:
- Figur 1:: eine Ansicht einer Fertigungsanlage;
- Figur 2:: eine Darstellung eines Wartungsschlüssels
- Figur 3:: eine Darstellung einer Sensoreinheit.

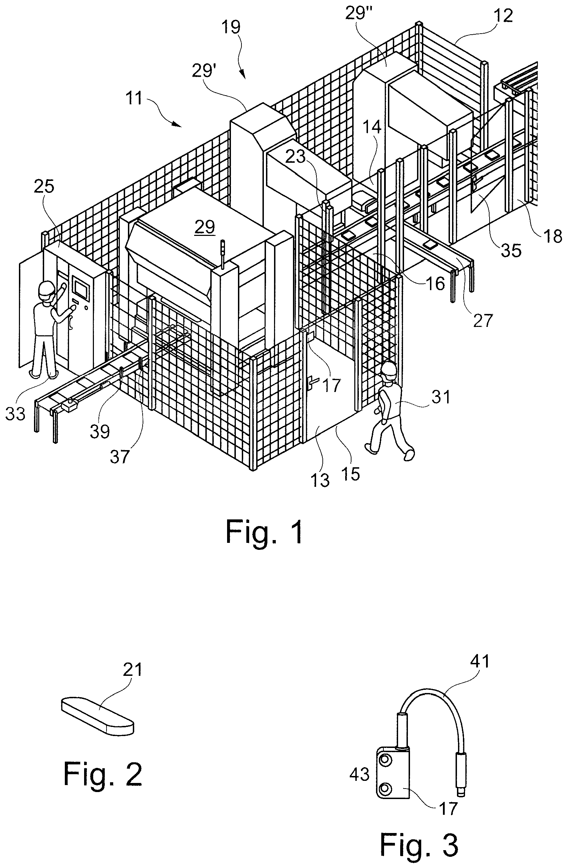

Die Figur 1 zeigt ein Beispiel für eine Fertigungsanlage 19, welche mit einer Schutzeinrichtung 11 gesichert ist. Die Schutzeinrichtung 11 umschliesst die Fertigungsanlage 19, die diverse Maschinen 29, 29' und 29" sowie Förderbänder 27 aufweist. Der Zuführungsbereich der Förderbänder 27 ist mit einer Lichtschranke 39 und einem Lichtgitter 37 gesichert. Die Fertigungsanlage wird über eine Steuereinheit 25 gesteuert. Die Schutzeinrichtung 11 besteht im Wesentlichen aus mehreren Schutzzäunen 12 und Schutzwänden 18 und weist mehrere Zutrittsbereiche 15, 16 auf. So ist der erste Zutrittsbereich 15 mit einer als Tür ausgeführten ersten Zutrittsbarriere 13 gesichert. Die erste Zutrittsbarriere 13 ist mit einer Sensoreinheit 17 ausgestattet. Diese Sensoreinheit 17 ist zweiteilig ausgeführt und besteht aus einem Lesegerät, welches am Türrahmen befestigt ist und aus einem an der Tür montierten Transponder, der sich bei geschlossener Tür im Detektionsbereich des Lesegerätes befindet. Der zweite Zutrittsbereich 16 ist mit einer als Tür ausgeführten zweiten Zutrittsbarriere 14 gesichert. Die Zutrittssicherung 23 weist neben einer zur Sensoreinheit 17 funktionsgleichen Sensoreinheit auch eine Verriegelungseinheit auf, die die zweite Zutrittsbarriere 14 nur unter bestimmten Bedingungen zum Öffnen freigibt, beispielsweise wenn ein Wartungsschlüssel 21 mit gültigen Daten im Detektionsbereich der Sensoreinheit der Zutrittssicherung 23 eingebracht ist. Die Sensoreinheit der Zutrittssicherung 23 ist wie die Sensoreinheit 17 zweiteilig ausgeführt und besteht aus einem Lesegerät, welches am Türrahmen befestigt ist und aus einem an der Tür montierten Transponder, der sich bei geschlossener Tür im Detektionsbereich des Lesegerätes befindet.

Wenn die Wartungsperson 31 die erste Zutrittsbarriere 13 öffnet, um über den ersten Zutrittsbereich 15 in einen der Gefahrenbereiche der Fertigungsanlage 19 zu gelangen, erkennt die Sensoreinheit 17, dass sich kein Transponder mehr in ihrem Detektionsbereich 43 befindet und veranlasst eine Abschaltung der Fertigungsanlage 19. Solange die erste Zutrittsbarriere 13 geöffnet ist, kann die Wartungsperson 33 auch nicht durch unmittelbaren Eingriff in die Steuereinrichtung 25 die Fertigungsanlage 19 wieder einschalten.

Registriert sich die Wartungsperson 31 mit ihrem Wartungsschlüssel 21 an der Sensoreinheit 17 durch Hinhalten des Wartungsschlüssels 21 an das Lesegerät der Sensoreinheit 17, so speichert die Sensoreinheit 17 die Daten des Wartungsschlüssels 21 sofern diese gültig sind und setzt ein weiteres Steuersignal ab, dass verhindert, dass die Fertigungsanlage in betriebsbereiten Zustand versetzt werden kann bzw. das verhindert, dass die Fertigungsanlage 19 wieder anfahren oder angefahren werden kann. Solange mindestens ein gültiger Datensatz mindestens eines Wartungsschlüssels 21 in der Sensoreinheit 17 gespeichert ist, ist daher eine Inbetriebnahme der Fertigungsanlage 19 nicht möglich.

Als gültig werden die Daten des Wartungsschlüssels 21 dann akzeptiert, wenn diese eine Kennung als Wartungsschlüssel 21 enthalten, und wenn die Identifikationsnummer des Wartungsschlüssels 21 als berechtigt zum Zutritt in den Gefahrenbereich der Fertigungsanlage 19 in der Sensoreinheit 17 hinterlegt ist.

Beim Verlassen des Gefahrenbereichs der Fertigungsanlage 19 muss die Wartungsperson 31 ihren Wartungsschlüssel 21 erneut in den Detektionsbereich 43 der Sensoreinheit 17 halten. Die Sensoreinheit 17 erkennt, dass die Daten des Wartungsschlüssels 21 bereits gespeichert sind und löscht daher diese Informationen. Gleichzeitig gibt sie die Fertigungsanlage 19 wieder frei, d.h. sie versetzt die Fertigungsanlage 19 wieder in einen betriebsbereiten Zustand. Wird nun die Zutrittsbarriere 13 von der Wartungsperson 31 geschlossen, so kann die Wartungsperson 33 die Fertigungsanlage 19 über die Steuereinheit 25 wieder anfahren oder die Anlage wird nach dem Schliessen wieder automatisch bestromt und fährt quasi alleine an.

Das korrekte Einlesen von gültigen Daten eines Wartungsschlüssels 21 wird der Wartungsperson 31 mittels Leuchtdioden, welche in den Figuren nicht ersichtlich sind, angezeigt und mit einem kurzen Piepton bestätigt. Ebenso wird mittels Leuchtdioden angezeigt, dass die Daten zumindest eines Wartungsschlüssels 21 in der Sensoreinheit 17 gespeichert sind. Ähnlich wird beim Löschen der Daten aus einem Speicher der Sensoreinheit 17 vorgegangen. Mittels eines Pieptons und einer entsprechenden Signalisation der Leuchtdioden wird das korrekte Einlesen in einer für die Wartungsperson 31 nachvollziehbaren Weise bestätigt und - sofern der Vergleich zwischen gerade eingelesenem Datensatz und gespeicherten Datensätzen ergibt, dass ein identischer Datensatz bereits gespeichert ist, wird dieser Datensatz aus dem Speicher gelöscht. Auch das Löschen eines Datensatzes wird mittels der Leuchtdioden angezeigt und kann mittels eines Pieptones bestätigt werden. Als Alternative sind selbstverständlich auch andere Anzeigen beispielsweise in Form kleiner OLED-Displays im Rahmen der Erfindung einsetzbar. Ebenso sind akustische oder haptische Signalgeber denkbar.

Entsprechend der zuvor beschriebenen Ausführungsform der Erfindung werden ausgelesene, gültige Daten von Wartungsschlüsseln 21 nur lokal in der Sensoreinheit 17 gespeichert. Sind jedoch die Sensoreinheit 17 und die Sensoreinheit der Zutrittssicherung 23 über einen fehlersicheren Datenbus mit der Steuereinheit 25 verbunden, kann die Überprüfung auf Gültigkeit sowie die Speicherung der Daten von Wartungsschlüsseln auch zentral in der Steuereinheit 25 erfolgen.

Die Schutzeinrichtung 11 weist ausserdem eine weitere Tür 35 auf, durch die ein Zugriff auf den Arbeitsbereich der Maschine 29" möglich ist. Diese Tür ist durch keine Überwachungseinrichtung gesichert.

In Fig. 2 ist ein Wartungsschlüssel 21 in perspektivischer Ansicht dargestellt. Es handelt sich bei dem in Fig. 2 gezeigten Wartungsschlüssel 21 um einen Datenträger, der als passiver RFID-Transponder ausgeführt ist.

In Fig. 3 ist der als Lesegerät ausgeführte Teil einer Sensoreinheit 17 ersichtlich. Die Sensoreinheit 17 wird über eine Verbindungsleitung 41 mit der Fertigungsanlage 19 bzw. der Steuereinheit 25 verbunden und weist in räumlichen Nahbereich der Sensoreinheit einen Detektionsbereich 43 auf.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

Dargestellt und beschrieben ist eine Schutzeinrichtung 11 für eine Fertigungsanlage 19 mit einem durch eine Zutrittsbarriere 13, 14 abgesicherten Zutrittsbereich 15, und mit einer Sensoreinheit 17 zur Überwachung eines Schliesszustandes der Zutrittsbarriere 13, 14, wobei die Sensoreinheit 17 dazu ausgebildet ist, die Fertigungsanlage 19 ausser Betrieb zu setzen, wenn das Öffnen der Zutrittsbarriere 13, 14 detektiert wird und die Fertigungsanlage in betriebsbereiten Zustand zu versetzen, wenn die Zutrittsbarriere 13, 14 geschlossen ist.

Erfindungsgemäss ist vorgesehen, dass die Sensoreinheit 17 dazu ausgebildet ist, Daten aus einem Wartungsschlüssel 21 auszulesen, die ausgelesenen Daten auf Gültigkeit zu prüfen und zu speichern und bei Vorliegen gültiger Daten ein Setzen in einen betriebsbereiten Zustand der Fertigungsanlage 19 zu unterbinden.

### BEZUGSZEICHENLISTE:

- 11: Schutzeinrichtung
- 12: Schutzzaun
- 13: Zutrittsbarriere
- 14: weitere Zutrittsbarriere
- 15: Zutrittsbereich
- 16: weiterer Zutrittsbereich
- 17: Sensoreinheit
- 18: Schutzwand
- 19: Fertigungsanlage
- 21: Wartungsschlüssel
- 23: Zutrittssicherung
- 25: Steuereinheit
- 27: Förderband
- 29, 29', 29": Maschinen
- 31: Wartungsperson 1
- 33: Wartungsperson 2
- 35: Tür
- 37: Lichtgitter
- 39: Lichtschranke
- 41: Elektrische Verbindungsleitung
- 43: Detektionsbereich

## Patentansprüche

1. Schutzeinrichtung (11) für eine Fertigungsanlage (19)
mit einem durch eine Zutrittsbarriere (13, 14) abgesicherten Zutrittsbereich (15), und
mit einer Sensoreinheit (17) zur Überwachung eines Schliesszustandes der Zutrittsbarriere (13, 14), wobei die Sensoreinheit (17) dazu ausgebildet ist,
die Fertigungsanlage (19) ausser Betrieb zu setzen, wenn das Öffnen der Zutrittsbarriere (13, 14) detektiert wird und die Fertigungsanlage in betriebsbereiten Zustand zu versetzen, wenn die Zutrittsbarriere (13, 14) geschlossen ist,
**dadurch gekennzeichnet,**
**dass** die Sensoreinheit (17) dazu ausgebildet ist, Daten aus einem Wartungsschlüssel (21) auszulesen, die ausgelesenen Daten auf Gültigkeit zu prüfen und zu speichern und bei Vorliegen gültiger Daten ein Setzen in einen betriebsbereiten Zustand der Fertigungsanlage (19) zu unterbinden.

2. Schutzeinrichtung für eine Fertigungsanlage nach Anspruch 1,
**dadurch gekennzeichnet,**
**dass** die Sensoreinheit (17) dazu ausgebildet ist, nur dann Daten aus einem Wartungsschlüssel (21) auszulesen, wenn die Sensoreinheit das Öffnen der Zutrittsbarriere (13, 14) detektiert hat und die Fertigungsanlage (19) ausser Betrieb gesetzt hat.

3. Schutzeinrichtung für eine Fertigungsanlage nach Anspruch 1 oder 2,
**dadurch gekennzeichnet,**
**dass** die Sensoreinheit (17) zur Überwachung des Schliesszustandes der Zutrittsbarriere (13, 14) ein RFID-Lesegerät und einen ersten an der Zutrittsbarriere (13, 14) angebrachten RFID-Transponder aufweist und
**dass** der Wartungsschlüssel (21) als ein zweiter RFID-Transponder ausgeführt ist, wobei das RFID-Lesegerät dazu ausgebildet ist, Daten aus beiden RFID-Transponder auszulesen.

4. Schutzeinrichtung für eine Fertigungsanlage nach einem der vorigen Ansprüche
**dadurch gekennzeichnet,**
**dass** gültige Daten des Wartungsschlüssels (21) eine Identifikationsnummer und eine Kennung, welche für einen Wartungsschlüssel (21) spezifisch ist, aufweisen.

5. Schutzeinrichtung für eine Fertigungsanlage nach einem der vorigen Ansprüche,
**dadurch gekennzeichnet,**
**dass** die Sensoreinheit (17) dazu ausgebildet ist, beim Auslesen der Daten diese mit allenfalls bereits gespeicherten gültigen Daten zu vergleichen und für den Fall, dass keine Übereinstimmung festgestellt wird, die ausgelesenen Daten ebenfalls zu speichern, und für den Fall, dass Übereinstimmung festgestellt wird, die Daten vorzugsweise aus dem Speicher zu löschen und sofern keine weiteren Daten gespeichert sind, die Fertigungsanlage (19) in betriebsbereiten Zustand zu versetzen.

6. Schutzeinrichtung für eine Fertigungsanlage nach einem der vorigen Ansprüche,
**dadurch gekennzeichnet,**
**dass** die Sensoreinheit (17) mit einer Steuereinheit (25) der Fertigungsanlage (19) über einen fehlersicheren Bus verbunden ist, und dass die Sensoreinheit (17) gültige Daten des Wartungsschlüssels (21) an diese Steuereinheit (25) weiterleitet.

7. Schutzeinrichtung für eine Fertigungsanlage nach einem der vorigen Ansprüche
**dadurch gekennzeichnet,**
**dass** zusätzlich zu der Sensoreinheit (17) ein weiteres Lesegerät zum Auslesen der Daten aus dem Wartungsschlüssel (21) vorgesehen ist, welches mit der Steuereinrichtung (25) der Fertigungsanlage über einen fehlersicheren Bus verbunden ist.

8. Schutzeinrichtung für eine Fertigungsanlage nach einem der vorigen Ansprüche,
**dadurch gekennzeichnet,**
**dass** die Sensoreinheit (17) dazu ausgebildet ist, eine Zutrittssicherung (23) der Zutrittsbarriere (13, 14) nur dann zum Öffnen freizugeben, wenn ein Wartungsschlüssel (21) mit gültigen Daten im Detektionsbereich (43) der Sensoreinheit (17) eingebracht ist.

9. Verfahren zum Betreiben einer Schutzeinrichtung (11) für eine Fertigungsanlage (1) insbesondere nach einem der vorstehenden Ansprüche, wobei die Fertigungsanlage (19) einen durch eine Zutrittsbarriere (13, 14) abgesicherten Zutrittsbereich (15) und eine Sensoreinheit (17) zur Überwachung des Schliesszustandes der Zutrittsbarriere (13, 14) aufweist, wobei die Sensoreinheit (17) die Fertigungsanlage (19) ausser Betrieb setzt, wenn das Öffnen der Zutrittsbarriere (13, 14) detektiert wird und die Fertigungsanlage (19) in betriebsbereiten Zustand versetzt, wenn die Zutrittsbarriere (13, 14) als geschlossen detektiert wird,
**dadurch gekennzeichnet,**
**dass** die Sensoreinheit (17) Daten aus einem Wartungsschlüssel (21) ausliest und die ausgelesenen Daten auf Gültigkeit prüft und bei Vorliegen gültiger Daten diese speichert und ein Setzen der Fertigungsanlage (19) in einen betriebsbereiten Zustand verhindert oder rückgängig macht.

10. Verfahren zum Steuern einer Schutzeinrichtung für eine Fertigungsanlage nach Anspruch 9,
**dadurch gekennzeichnet,**
**dass** die Sensoreinheit (17) nur dann Daten aus einem Wartungsschlüssel (21) ausliest, prüft und speichert, wenn die Sensoreinheit (17) das Öffnen der Zutrittsbarriere (13, 14) detektiert hat und die Fertigungsanlage (19) ausser Betrieb gesetzt hat.

11. Verfahren zum Steuern einer Schutzeinrichtung für eine Fertigungsanlage nach Anspruch 9 oder 10,
**dadurch gekennzeichnet,**
**dass** die Überwachung des Schliesszustandes der Zutrittsbarriere (13, 14) mit einem RFID-Lesegerät und einem ersten RFID-Transponder erfolgt, wobei das RFID-Lesegerät auch Daten aus einem zweiten, als RFID-Transponder ausgeführten Wartungsschlüssel (21) ausliest.

12. Verfahren zum Steuern einer Schutzeinrichtung für eine Fertigungsanlage nach Anspruch 9, 10 oder 11,
**dadurch gekennzeichnet,**
**dass** die Sensoreinheit (17) prüft, ob die ausgelesenen Daten des Wartungsschlüssels (21) eine RFID-spezifische Kennung enthalten sowie eine Kennung, welche spezifisch ist für einen Wartungsschlüssel (21).

13. Verfahren zum Steuern einer Schutzeinrichtung für eine Fertigungsanlage nach einem der vorigen Ansprüche 9 bis 12,
**dadurch gekennzeichnet,**
**dass** die Sensoreinheit (17) ausgelesene Daten mit allenfalls bereits gespeicherten gültigen Daten vergleicht und für den Fall, dass keine Übereinstimmung festgestellt wird, die ausgelesenen Daten ebenfalls speichert, und für den Fall, dass Übereinstimmung festgestellt wird, die Daten vorzugsweise aus dem Speicher löscht und sofern keine weiteren Daten gespeichert sind die Fertigungsanlage (19) in betriebsbereiten Zustand versetzt.

14. Verfahren zum Steuern einer Schutzeinrichtung für eine Fertigungsanlage nach einem der vorigen Ansprüche 9 bis 13,
**dadurch gekennzeichnet,**
**dass** die Sensoreinheit (17) mit einer Steuereinheit (25) der Fertigungsanlage (19) über einen fehlersicheren Bus verbunden ist, und dass die Sensoreinheit (17) die ausgelesenen Daten an diese Steuereinheit (25) weiterleitet.

15. Verfahren zum Steuern einer Schutzeinrichtung für eine Fertigungsanlage nach einem der vorigen Ansprüche 9 bis 14,
**dadurch gekennzeichnet,**
**dass** die Sensoreinheit (17) eine Zutrittssicherung (23) der Zutrittsbarriere (13, 14) nur dann zum Öffnen freigibt, wenn ein Wartungsschlüssel (21) mit gültigen Daten im Detektionsbereich der Sensoreinheit (17) eingebracht wurde.

16. Sensoreinheit mit einem Lesegerät zum Auslesen von Daten aus einem Wartungsschlüssel zur Verwendung mit einem Verfahren nach den Ansprüchen 9 bis 15 sowie zur Verwendung in einer Schutzeinrichtung für eine Fertigungsanlage nach einem der Ansprüche 1 bis 8.
